# EUROPÄISCHE PATENTSCHRIFT

(11) **EP 1 346 212 B1**
(45) Veröffentlichungstag und Bekanntmachung des Hinweises auf die Patenterteilung: **29.03.2006**
(21) Anmeldenummer: 01988021.0
(22) Anmeldetag: 13.12.2001
(51) Int. Cl.: G01N 27/66

(54) **VERFAHREN UND VORRICHTUNG ZUM PRÜFEN VON MEHRSCHICHTFOLIEN UND DARAUS HERSGESTELLTEN BEHÄLTERN**
METHOD AND DEVICE FOR EXAMINING MULTI-LAYERED FILMS AND CONTAINERS PRODUCED THEREFROM
PROCEDE ET DISPOSITIF DE CONTROLE DE COMPOSITES MULTICOUCHES ET CONTENANTS FABRIQUES A PARTIR DE CES COMPOSITES

(30) Priorität: 21.12.2000 DE 10063833
(43) Veröffentlichungstag der Anmeldung: 24.09.2003
(73) Patentinhaber: Boehringer Ingelheim International GmbH, 55216 Ingelheim (DE)
(72) Erfinder: HENNING, Carsten, 45663 Recklinghausen (DE); WITTEKIND, Jürgen, 60596 Frankfurt/Main (DE); KLADDERS, Heinrich, 45468 Muelheim (DE); HAUSMANN, Matthias, 44287 Dortmund (DE); KÜHNEL, Andreas, 61440 Oberursel (DE); RENGEL, Heiko, 55270 Ober-Olm (DE)
(86) Internationale Anmeldenummer: PCT/EP2001/014638
(87) Internationale Veröffentlichungsnummer: WO 2002/050525

(56) Entgegenhaltungen:
- WO-A-95/09351
- WO-A-95/23326
- DE-A- 19 651 208
- US-A- 4 858 767
- US-A- 5 523 565

## Beschreibung

Die Erfindung betrifft ein Verfahren zum Prüfen von Mehrschichtverbunden, zum Beispiel Metall-Kunststoff-Verbundfolien, sowie daraus gefertigten Behältern. Die Erfindung betrifft ferner eine zur Durchführung des Verfahrens geeignete Vorrichtung.

Die Erfindung bezweckt, ein Verfahren anzugeben, mit dem Schadstellen in einer elektrisch nicht leitenden Schicht mit großer Empfindlichkeit nachgewiesen werden können, und das für Großserienfertigung geeignet ist.

Mit dem Ausdruck "Schadstelle" wird eine Stelle der elektrisch nicht leitenden Schicht bezeichnet, deren Größe im mikroskopischen oder submikmskopischen Bereich liegt, und die für Moleküle eines Stoffes besser durchlässig ist als der Diffusionskonstanten des Stoffes in der vorliegenden Schicht ohne eine derartige Schadstelle entspricht.

Metall-Kunststoff-Verbunde oder Verbunde aus einem elektrisch leitenden Kunststoff und einem elektrisch nicht leitenden Kunststoff oder mit einem elektrisch nicht leitenden Kunststoff auf der Innenseite beschichtete formstabile Behälter werden für Verpackungen verwendet, die die verpackten Produkte, zum Beispiel Lebensmittel oder pharmazeutische Präparate in flüssiger oder fester Form, in besonderem Maße schützen sollen, zum Beispiel gegen eindiffundierende Luft, gegen Luftfeuchte, gegen Licht oder gegen den Diffusionsverlust von flüchtigen Inhaltsstoffen aus der Verpackung.

Verbunde dieser Art bestehen aus einer dünnen Metallfolie, in der Regel einer Aluminiumfolie, die im allgemeinen beidseitig mit einer oder mehreren Kunststoff-Folien beschichtet ist. Üblicherweise ist eine Seite der Aluminium-Folien mit einer siegelfähigen Beschichtung versehen, die es ermöglicht, aus solchen Verbunden hermetisch dichte Behältnisse herzustellen, zum Beispiel Beutelverpackungen.

Reine Kunststoff-Folien sind gegen Gase und Dämpfe im allgemeinen durchlässig. Verbundfolien aus Metall und Kunststoff dagegen sind praktisch diffusionsdicht. Bei aus solchen Verbundfolien hergestellten Behältern wird die Diffusion im wesentlichen durch die Güte der Siegelnaht bestimmt.

Damit die Verbundfolien hinreichend flexibel sind, werden die Einzelfolien, insbesondere die Kunststoff-Innenfolie, die dem verpackten Produkt zugewandt ist, sehr dünn gehalten. Bei der Verarbeitung zu den entsprechenden Behältern kann diese dünne Innenfolie leicht beschädigt werden, und das verpackte Produkt kann an gasdurchlässigen Schadstellen in der Innenfolie Kontakt mit der darunter liegenden Metallfolie haben. Bei empfindlichen Produkten kann dieser Metall-Kontakt das verpackte Produkt beeinträchtigen. Weiter kann das verpackte Produkt die Metallfolie durch Korrosion zerstören, wodurch die Verbundfolie ihre Diffusionsdichtheit verliert.

Zum Prüfen der Unversehrtheit eines Verbundes und der Dichtheit von aus einem derartigen Verbund bestehenden oder hergestellten Behältern sind mehrere Verfahren bekannt. Bei einem verbreiteten Verfahren wird der befüllte und verschlossene Behälter in eine Unterdruckkammer gestellt, die mit einem empfindlichen Manometer versehen ist, und die über ein Ventil mit einer Vakuumpumpe verbunden ist. Wird die Unterdruckkammer auf einen vorgegebenen Druck evakuiert und dann das Ventil geschlossen, tritt bei einer Undichtheit des Behälters ein Teil des Füllgutes aus dem Behälter aus und verdampft entsprechend seinem Dampfdruck im Vakuum, wodurch der am Manometer angezeigte Druck ansteigt. Der vom Manometer angezeigte. Druck kann als Indikator für eine Undichtheit verwendet werden.

DE - 196 51 208 beschreibt ein Prüfverfahren; bei dem die Helligkeit einer Gasentladung im Vakuum als Indikator für die aus einem befüllten Behälter ausgetretene Leckmenge verwendet wird.

Bei einem weiteren sehr empfindlichen Verfahren wird in den Behälter Helium eingebracht Das aus dem verschlossenen Behälter ausgetretene Helium wird massenspektrometrisch nachgewiesen.

Bei einem anderen Verfahren werden Kunststoff-Beschichtungen auf Metallflächen auf Porenfreiheit geprüft. Dabei wird die Metallfläche mit dem einen Pol einer Spannungsquelle verbunden. Eine flexible Elektrode, die zum Beispiel aus einem elektrisch leitenden Elastomer bestehen kann, wird über ein Meßgerät mit dem anderen Pol der Spannungsquelle verbunden. Die zu prüfende beschichtete Oberfläche wird mit der flexiblen Elektrode abgetastet. Falls sich zwischen der flexiblen Elektrode und dem leitenden Untergrund eine Schadstelle in der Beschichtung befindet, fließt in dem Stromkreis ein elektrischer Strom, der als Indikator für die gasdurchlässige Schadstelle dient.

Nach einem weiteren Verfahren kann die zu prüfende Kunststoff-Beschichtung auf einer Metallfläche mit einem Elektrolyten benetzt werden, in den eine Elektrode eintaucht. Die andere Elektrode wird durch die Metallfläche gebildet. Beide Elektroden werden in einen elektrischen Stromkreis gelegt, der ein Meßgerät und eine Spannmgsquelle enthält. Falls sich in dem mit dem Elektrolyten benetzten Bereich der Beschichtung eine Schadstelle befindet, fließt in dem mit einer Spannungsquelle versehenen Stromkreis ein elektrischer Strom, der als Indikator für die Schadstelle dient. Bei Verbundfolien aus Kunststoff und Metall wird die Metallfolie als die eine Elektrode benutzt.

Formstabile Behältern mit elektrisch isolierender Innenschicht können in gleicher Weise geprüft werden. Dabei wird der Behälter mit einem Elektrolyten befüllt, in den die eine Elektrode eintaucht.

Das Abtasten der Oberfläche mit einer Elektrode ist nur bei ebenen oder schwach gekrümmten und zugänglichen Flächen möglich. Kleine Behälter können auf diese Weise nicht geprüft werden.

Bei Verwendung eines Elektrolyten können auch kleine Behälter geprüft werden. Die geprüften und als einwandfrei befundenen Behälter sind jedoch sorgfältig zu spülen und zu trocknen, wodurch die Prüfung großer Stückzahlen von Behältern sehr erschwert wird. Bei miniaturisierten und sterilisierten Einwegbehältern für pharmazeutische Produkte sind Abtastverfahren und Elektrolytverfahren nicht praktikabel.

Die Prüfung von Behältern aus elektrisch isolierenden Material mittels Gasentladung ist aus WO95/09351 bekannt. WO95/23326 beschreibt die Prüfung isolierter Leiter.

Damit stellt sich die Aufgabe, ein Verfahren und eine Vorrichtung anzugeben zum Nachweisen von gasdurchlässigen Schadstellen in Prüfungen, die aus einer elektrisch nicht leitenden Schicht bestehen, wobei der elektrisch nicht leitenden Schicht auf der einen Seite eine elektrisch leitende Schicht und auf der anderen Seite ein Gasraum gegenüber liegt. Die Prüflinge können als einzelne elektrisch nicht leitende Schicht oder als Mehrschichtverbund sowie als daraus gefertigte Behälter vorliegen.

Mit dem Verfahren soll die Unversehrtheit der elektrisch nicht leitenden Schicht sowie die Dichtheit von aus der elektrisch nicht leitenden Schicht oder aus dem Mehrschichtverbund hergestellten Behältern geprüft werden können, und zwar auch dann, wenn bei einem Mehrschichtverbund nur eine der nicht leitenden Schichten beschädigt ist. Das Verfahren soll auch für miniaturisierte Behälter und bei großen Stückzahlen anwendbar sein und möglichst automatisch ablaufen.

Diese Aufgabe wird erfindungsgemäß gelöst durch ein Vefahren und eine Vorrichtung mit den in Ansprüchen 1 und 19 angegebenen Merkmalen. Mindestens ein Prüfling wird in einer auf einen vorgegebenen Druck evakuierten und auf diesem Druck gehaltenen Prüfkammer angeordnet. Das Gas im Gasraum wird mittels einer elektrischen Gasentladung auf der anderen Seite der elektrisch nicht leitenden Schicht ionisiert, durch Stoßionisation bei Dunkelentladung. Zwischen der elektrisch leitenden Schicht, die auf der anderen Seite der elektrisch nicht leitenden Schicht liegt, und einer in der Prüfkammer angeordneten Gegenelektrode wird eine elektrische Spannung angelegt, die im Bereich der elektrisch nicht leitenden Schicht eine Feldstärke erzeugt, die unterhalb der Durchschlagfeldstärke der elektrisch nicht leitenden Schicht ohne gasdurchlässige Schadstellen liegt. Zwischen der elektrisch leitenden Schicht und der in der Prüfkammer angeordneten Gegenelektrode fließt - bei Vorliegen einer gasdurchlässigen Schadstelle in der elektrisch nicht leitenden Schicht - ein elektrischer Strom durch das ionisierte Gas, der als Indikator für die gasdurchlässige Schadstelle in der elektrisch nicht leitenden Schicht dient. Während der Messung dieses Stromes bleibt die elektrische Gasentladung aufrechterhalten.

Die Gasentladung durch Staßionisation bei Dunkelentladung kann einerseits in einer Gasentladungskammer erfolgen, die von der Prüfkammer elektrisch abgeschirmt ist, und die mit der Prüfkammer über mindestens einen Kanal oder über ein Drahtgitter in Verbindung steht. Ein Teil des ionisierten Gases tritt durch den Kanal oder durch das Drahtgitter aus der Gasentladungskammer in die Prüfkammer über. Bei dieser Anordnung ist innerhalb der Prüfkammer nur ein schwaches vom Hochspannungsfeld in der Gasentladungskammer herrührendes elektrisches Feld vorhanden, das den Prüfstromkreis kaum beeinflußt. Die Gasentladung kann anderseits in der Prüfkammer selbst erfolgen.

In beiden Fällen steht das ionisierte Gas nur auf der Seite mit der nicht leitenden Schicht in Kontakt, an die der Gasraum angrenzt. Das ionisierte Gas steht zum Beispiel bei einem Zweischichtverbund aus einer einseitig beschichteten Metallfolie nur auf der mit der elektrisch nicht leitenden Schicht versehenen Seite des Zweischichtverbundes an.

Es kann zweckmäßig sein, das Gas innerhalb der Prüfkammer mittels einer elektrischen Gasentladung mit Gleichspannung zu ionisieren und zwischen der elektrisch leitenden Schicht und der in der Prüfkammer angeordneten Gegenelektrode eine Wechselspannung anzulegen.

Weiter kann es zweckmäßig sein, die Spannung im Prüfstromkreis und den Gasdruck im Gasraum auf Werte einzustellen, bei denen die elektrische Feldstärke im Bereich zwischen Gegenelektrode und elektrisch leitender Schicht unterhalb der Durchschlagfeldstärke der elektrisch nicht leitenden Schicht ohne gasdurchlässige Schadstelle liegt, und bei denen an einer gasdurchlässigen Schadstelle in der elektrisch nicht leitenden Schicht durch einen Spannungsdurchschlag eine erkennbare Veränderung erzeugt wird, mit der der Ort der gasdurchlässigen Schadstelle optisch markiert wird. Damit wird die elektrisch leitende Schicht für die bestimmungsgemäße Verwendung unbrauchbar. Die optische Markierung der Schadstellen erleichtert jedoch weitere Untersuchungen zur räumlichen Lage der Schadstellen und über ihre Entstehungsursachen.

Im ionisierten Gas in der Prüfkammer wird durch Anlegen einer elektrischen Spannung zwischen der elektrisch leitenden Schicht und der in der Prüfkammer angeordneten Gegenelektrode ein elektrischer Strom erzeugt falls in der dazwischen liegenden elektrisch nicht leitenden Schicht eine gasdurchlässige Schadstelle vorhanden ist. In diesem Fall steht an der gasdurchlässigen Schadstelle das ionisierte Gas mit der elektrisch leitenden Schicht in Berührung, und der Strom im Prüfstromkreis ist größer als bei einer elektrisch nicht leitenden Schicht ohne gasdurchlässige Schadstelle.

Die Gasentladung wird durch hochgespannte elektrische Energie betrieben, die in geeigneter Weise mittels Elektroden oder kapazitiv oder induktiv eingespeist werden kann. Die Einspeisung mittels Elektroden wird bevorzugt. Die Gasentladung kann mit Gleichspannung oder mit Wechselspannung von 0,5 kV bis 10 kV betrieben werden. Die Frequenz der Wechselspannung kann im Niederfrequenzbereich liegen und bevorzugt von 10 Hz bis 30 kHz betragen, besonders bevorzugt von 40 Hz bis 70 Hz. Ferner kann die Frequenz der Wechselspannung im Hochfrequenzbereich von 30 kHz bis 1 GHz liegen und bevorzugt von 30 kHz bis 100 kHz, besonders bevorzugt von 30 kHz bis 40 kHz, betragen.

Der Stromfluß im ionisierten Gas in der Prüfkammer kann durch Anlegen einer elektrischen Gleichspannung oder einer elektrischen Wechselspannung erzeugt werden, bevorzugt wird eine elektrische Spannung von 50 V bis 5000 V, bevorzugt von 500 V bis 1500 V. Die von dieser elektrischen Spannung im Bereich der nicht leitenden Schicht erzeugte elektrische Feldstärke liegt unterhalb der Durchschlagfeldstärke der elektrisch nicht leitenden Schicht ohne gasdurchlässige Schadstelle.

Der Druck im Gasraum, der entweder die Gasentladungskammer und die Prüfkammer oder nur die Prüfkammer umfassen kann, beträgt von 0,5 hPa bis 50 hPa (0,5 mbar bis 50 mbar), vorzugsweise von 1 hPa bis 4 hPa (1 mbar bis 4 mbar). Der Gasraum kann mit Stickstoff, einem Edelgas oder bevorzugt mit Luft gefüllt sein.

Der Prüfling kann ein Mehrschichtverbund sein und aus einer elektrisch leitenden Schicht und mindestens einer elektrisch nicht leitenden Schicht bestehen. Der Verbund kann entweder als Verbundbahn oder als Verbundabschnitt vorliegt. Als Prüfling ist ferner eine einzelne elektrisch nicht leitende Schicht in Form einer Folie oder Platte mit fast beliebiger Dicke geeignet, der auf der einen Seite eine elektrisch leitende Schicht gegenüber liegt, und der auf der anderen Seite der Gasraum gegenüber liegt. Die elektrisch leitende Schicht kann in diesem Fall eine Platte oder ein topfförmiger Deckel aus Metall sein, mit dem die Prüfkammer gasdicht verschlossen wird. Die metallene Platte kann die elektrisch nicht leitende Schicht auf der einen Seite berühren, oder sie kann in einem bevorzugt geringen Abstand von der einen Seite der elektrisch nicht leitenden Schicht angebracht sein.

Weiter kann der Prüfling ein aus einem Mehrschichtverbund oder aus einer einzelnen elektrisch nicht leitenden Schicht hergestellter Behälter sein, der eine Öffnung hat. Solche Behälter können zum Beispiel aus einem relativ dicken und damit steifen Mehrschichtverbund oder aus einem steifen Kunststoff bestehen und annähernd formstabil sein, oder sie können aus einem relativ dünnen Mehrschichtverbund oder aus einer relativ dünnen Kunststoff-Folie bestehen und kollabierbar sein. Weiter ist ein miniaturisierter formstabiler Metallbehälter mit elektrisch nicht leitender Innenbeschichtung geeignet. Derartige Behälter werden zum Verpacken empfindlicher pharmazeutischer Produkte verwendet.

Die Form der Prüfkammer wird an die Form der Prüflinge angepaßt Liegt der Prüfling in Form eines Behälters vor, der zum Beispiel mit einer Siegelnaht sowie mit einem Flansch und einer durch den Flansch hindurch gehenden Öffnung versehen ist, wird der Behälter im Bereich seines Flansches in einen mit einer angepaßten Öffnung versehenen Probenträger aus einem elektrisch nicht leitenden Material dicht eingesetzt. Der Probenträger dient als Abdeckung für die Prüfkammer und ist bevorzugt nur geringfügig größer als der eingesetzte Behälter. Der Probenträger umschließt den Behälter und hält das ionisierte Gas von der Außenseite des Behälters und damit von der gegebenenfalls frei liegenden elektrisch leitenden Schicht fern. Die Gegenelektrode kann in den Behälter durch dessen Öffnung hindurch eingeschoben werden; sie berührt den. Behälter und die Innenwand der Öffnung im Behälterflansch im allgemeinen nicht Die elektrische Zuleitung zu der elektrisch leitenden Schicht des Mehrschichtverbundes wird gasdicht durch den Probenträger hindurch geführt und in dem von ionisiertem Gas freien Raum in der Umgebung der Außenseite des Behälters mit der elektrisch leitenden Schicht des Behälters verbunden. Bei einem Behälter, der aus einem Zweischichtverbund besteht, bei dem die Innenseite einer Metallfolie mit einer Kunststoff-Folie als nicht leitender Schicht belegt ist, kann die elektrische Zuleitung an der Außenseite der Metallfolie im Bereich der Siegelnaht oder im Bereich des Flansches angelegt werden. Bei einem Behälter, der aus einem Dreischichtverbund besteht, bei dem die Metallfolie auf beiden Seiten mit einer Kunststoff-Folie als nicht leitender Schicht belegt ist, werden bevorzugt beide Kunststoff-Folien und die Metallschicht zum Beispiel im Bereich der Siegelnaht von der elektrischen Zuleitung nadelartig durchstochen, wodurch der elektrische Kontakt zur Metallschicht hergestellt wird.

Falls der Prüfling ein kollabierbarer Folienbeutel ist, kann es zweckmäßig sein, den freien Raum zwischen der Innenseite des Probenträgers und der Außenseite des kollabierbaren Folienbeutels auf dem gleichen Gasdruck zu halten wie im Innenraum des Folienbeutels, damit der Folienbeutel bei der Prüfung in nicht kollabierter Form vorliegt.

Gegebenenfalls können mehrere Behälter nebeneinander in der Prüfkammer angeordnet werden. Der im ionisierten Gas in der Prüfkammer erzeugte Prüfstrom kann für jeden in der Prüfkammer angeordneten Behälter separat oder bei Parallelschaltung für alle Behälter gemeinsam gemessen werden.

Liegt der Prüfling in Form eines Abschnittes des Mehrschichtverbundes vor, wird der Verbundabschnitt auf die eine Seite eines beispielsweise scheibenförmigen Probenträgers aus elektrisch nicht leitendem Material gelegt, dessen Abmessungen an die Abmessungen des Verbundabschnittes angepaßt sind. Der scheibenförmige Probenträger und damit der aufgelegte Verbundabschnitt wird an ein angepaßtes Gegenstück dicht angedrückt, das mit einer Öffnung versehen ist, deren Größe an die Größe des Verbundabschnittes angepaßt ist. Das ionisierte Gas wird von der dem scheibenförmigen Probenträger zugewandten Seite des Mehrschichtverbundes ferngehalten. Die Gegenelektrode wird auf der dem ionisierten Gas zugewandten Seite des Mehrschichtverbundes in der Nähe der Öffnung im Gegenstück angebracht; sie berührt den Mehrschichtverbund im allgemeinen nicht. Die elektrische Zuleitung kann mit der elektrisch leitenden Schicht des Abschnittes des Mehrschichtverbundes im Bereich seines von außen zugänglichen Randes ähnlich wie bei der Prüfung eines Behälters verbunden werden.

Liegt der Prüfling als Verbundbahn vor, kann die Verbundbahn an der Öffnung im Gegenstück schrittweise vorbei bewegt werden. Die Verbundbahn kann mittels einer Andrückplatte bereichsweise an das Gegenstück dicht angedrückt und bereichsweise geprüft werden. Die Gegenelektrode, befindet sich auf der dem ionisierten Gas zugewandten Seite der Verbundbahn. Die elektrische Zuleitung zu der elektrisch leitenden Schicht des Mehrschichtverbundes kann am Rand oder an einem Ende der Verbundbahn angelegt werden. In diesem Fall wird der im ionisierten Gas in der Prüfkammer erzeugten Stromfluß für jeweils einen Bereich des Mehrschichtverbundes gemessen. Damit lassen sich gasdurchlässige Schadstellen in dem Bereich der nicht leitenden Schicht nachweisen, der dem ionisierten Gas ausgesetzt ist.

Das erfindungsgemäße Verfahren kann beispielsweise wie folgt durchgeführt werden. Ein Prüfling wird in die Prüfkammer eingesetzt. Die Prüfkammer wird auf einen vorgegebenen Gasdruck evakuiert und auf diesem Druck gehalten. Das Gas wird mittels einer von der Prüfkammer elektrisch abgeschirmten Gasentladung ionisiert. Die Gasentladung wird in einer Gasentladungskammer betrieben, die von der Prüfkammer räumlich getrennt ist. Die Gasentladungskammer kann mit der Prüfkammer über einen engen Kanal verbunden sein, oder zwischen der Gasentladungskammer und der Prüfkammer kann ein elektrisch leitendes Drahtnetz angebracht sein. In beiden Fällen ist auch in der Prüfkammer ein ionisiertes Gas vorhanden, so lange die Gasentladung aufrecht ahaten wird. An die elektrisch leitende Schicht des Mehrschichtverbundes und an eine Gegenelektrode wird eine Prüfspannung angelegt. Die Gegenelektrode befindet sich innerhalb der mit ionisiertem Gas gefüllten Prüfkammer bevorzugt in der Nähe des Prüflings; sie kann in einen Prüfling in Form eines Behälters hineinragen. Der im Prüfstromkreis über das ionisierte Gas in der Prüfkammer fließende elektrische Strom wird gemessen. Die Größe diese Stromes ist ein Indikator für die Unversehrtheit der nicht leitenden Schicht, die dem ionisierten Gas ausgesetzt ist. Enthält die nicht leitende Schicht eine gasdurchlässige Schadstelle, an der die elektrisch leitende Schicht des Mehrschichtverbundes in Kontakt mit dem ionisierten Gas steht, ist der Prüfstrom größer als bei einer Kunststoff Schicht, die keine gasdurchlässige Schadstelle enthält.

Der Gasdruck und die Spannung im Prüfstromkreis können auf Werte eingestellt werden, bei denen an einer gasdurchlässigen Schadstelle in der elektrisch nicht leitenden Schicht ein Spannungsdurchschlag eintritt. Dabei kann die Durchschlagstelle sichtbar oder meßbar verändert werden, zum Beispiel geschwärzt werden, wodurch sich die gasdurchlässige Schadstelle leicht lokalisiert läßt.

Das erfindungsgemäße Prüfverfahren arbeitet berührungsfrei. Zwar wird die elektrisch leitende Schicht eines Mehrschichtverbundes an einer geeigneten Stelle, zum Beispiel am Verbundrand oder bei einem Behälter bevorzugt an der Siegelnaht mit einer elektrischen Anschlußleitung verbunden, jedoch wird die zu prüfende nicht leitende Schicht, weder mit einem Gegenstand (wie der Gegenelektrode) berührt, noch steht sie mit einer Flüssigkeit (wie einem Elektrolyten) in Kontakt. Die nicht leitende Schicht kann also von einem Gegenstand nicht beschädigt werden. Von einer Flüssigkeit bleiben auf der nicht leitenden Schicht keine Reste zurück.

Das erfindungsgemäße Verfahren arbeitet (anstelle eines Elektrolyten) mit einem ionisierten und damit elektrisch leitenden Gas. Das Gas kann mittels einer Gasentladung erzeugt werden, die gegen die Prüfkammer elektrisch abgeschirmt ist. Der Prüfling befindet sich außerhalb der Gasentladungskammer und ist dem elektrischen Hochspannungsfeld in der Gasentladungskammer nicht ausgesetzt. Die Prüfkammer steht mit der elektrisch abgeschirmten Gasentladungskammer entweder nur über einen Kanal in Verbindung, oder die elektrische Abschirmung der Gasentladungskammer besteht an der Grenze zur Prüfkammer aus einem elektrisch leitenden Drahtgitter oder Drahtgeflecht. Bei beiden Anordnungen dringt das in der Gasentladungskammer ionisierte Gas in die Prüfkammer ein und macht den Raum zwischen Gegenelektrode und zu prüfender elektrisch nicht leitender Schicht elektrisch leitend, so lange die Gasentladung in der Gasentladungskammer aufrechterhalten wird. Der Prüfstromkreis wird durch das abgeschirmte Hochspannungsfeld in der Gasentladungskammer nicht beeinträchtigt.

Falls sich der Prüfling im Hochspannungsfeld der Gasentladungskammer befindet, kann die Messung des Stromes im Prüfstromkreis beeinträchtigt werden, und die Bauteile des Prüfstromkreises können gefährdet werden. Weiter kann zum Beispiel eine sehr dünne elektrisch nicht leitende Schicht durchschlagen und beschädigt werden. Derartige Schwierigkeiten werden durch die Anordnung des Prüflings außerhalb der elektrisch abgeschirmten Gasentladungskammer umgangen.

Das Gas in der Prüfkammer kann auch mittels der von einem radioaktiven Präparat ausgehenden ionisierenden Strahlung ionisiert werden. Wegen der erforderlichen umfangreichen Schutzmaßnahmen ist dieses Verfahren weniger praktilrabel.

Zum Durchführen des erfindungsgemäßen Verfahrens ist eine Vorrichtung geeignet, bei der eine elektrisch leitende Schicht auf der einen Seite der elektrisch nicht leitenden Schicht angeordnet ist, und auf der anderen Seite der elektrisch nicht leitenden Schicht ein Gasraum angeordnet ist. Weiter sind Mittel zum Evakuieren des Gasraumes vorhanden. Innerhalb des Gasraumes ist eine Elektrode zum Erzeugen der Gasentladung angeordnet. Im Gasraum ist eine Gegenelektrode vorgesehen, die mit einer Spannungsquelle und einem Meßgerät einen Prüfstromkreis bildet

Bei der ersten Ausführungsform der erfindungsgemäßen Vorrichtung ist eine Gasentladungskammer vorgesehen, die einen Teil des Gasraumes bildet. Die Gasentladungskammer enthält bevorzugt eine Elektrode zum Erzeugen der Gasentladung. Die Gasentladungskammer ist von der Prüfkammer elektrisch abgeschirmt. Die Gasentladungskammer ist mit der Prüfkammer, die einen weiteren Teil des Gasraumes bildet, über mindestens einen Kanal verbunden. Weiter sind Mittel vorgesehen, die an die Gasentladungskammer angeschlossen sind, und die zum Evakuieren und zum Einstellen des vorgegebenen Gasdruckes im Gasraum dienen, der aus der Gasentladungskammer und der Prüfkammer besteht. Der Prüfstromkreis enthält eine Spannungsquelle, ein Anzeigegerät und die innerhalb der Prüfkammer angeordnete Gegenelektrode sowie gegebenenfalls einen Schutzwiderstand. Der Prüfstromkreis dient zum Messen eines zwischen der elektrisch leitenden Schicht und der in der Prüfkammer angeordneten Gegenelektrode durch das ionisierte Gas fließenden elektrischen Stromes, falls die elektrisch nicht leitende Schicht eine gasdurchlässige Schadstelle enthält.

Bei einer weiteren Ausführungsform der erfindungsgemäßen Vorrichtung besteht der Gasraum aus der Prüfkammer, an die Mittel zum Evakuieren und zum Einstellen des vorgegebenen Gasdrucks in der Prüfkammer angeschlossen sind. In der Prüfkammer ist eine Elektrode zum Erzeugen der elektrischen Gasentladung angeordnet. Weiter ist in der Prütkammer eine Gegenelektrode angebracht, die mit einer Spannungsquelle und einem Anzeigegerät sowie gegebenenfalls mit einem Schutzwiderstand einen Prüfstromkreis bildet, in dem beim Vorliegen einer gasdurchlässigen Schadstelle in der elektrisch nicht leitenden Schicht ein durch das ionisierte Gas in der Prüfkammer fließender elektrischer Strom gemessen wird.

Das Anzeigegerät im Prüfstromkreis kann als Schaltgerät ausgebildet sein, das nach Überschreiten eines eingestellten Stromgrenzwertes ein Signal abgibt oder eine Wirkung auslöst.

Außer den Mitteln zum Evakuieren des Gasraumes kann ein Druckausgleichsgefäß vorgesehen sein, dessen Volumen groß gegen das Volumen des Gasraumes ist, und mit dem ein schnelles Evakuieren des Gasraumes nach dem Wechseln von Prüflingen erreicht wird, bei dem die Prüfkammer geöffnet wird.

Weiter kann in dem Kanal, der die Gasentladungskammer mit der Prüfkammer verbindet, eine Absperrventil vorgesehen sein, zum Beipiel ein gasdichtes Magnetventil, das beim Wechseln von Prüflingen vor dem Öffnen der Prüfkammer geschlossen wird und nach dem Schließen der Prüfkammer geöffnet wird.

Zum Abdecken des Prüflings in Form eines Behälters ist ein Probenträger aus einem elektrisch nicht leitenden Material vorgesehen.

Falls der Prüfling ein kollabierbarer Behälter ist, der im nicht kollabierten Zustand zu prüfen ist, ist der freie Raum, der außerhalb des Behälters und innerhalb der Abdeckung des Behälters liegt, ebenfalls auf den vorgegebenen Druck im Gasraum zu evakuieren. Dafür wird dieser freie Raum über eine Leitung mit der Evakuierungsvorrichtung verbunden.

Damit durch diese Evakuierungsleitung kein ionisiertes Gas aus dem Gasraum eindringt, kann die Leitung mit einem Ventil versehen sein, das jeweils am Ende eines Evakuierungsvorganges geschlossen und nach einem Prüflingswechsel zum Beginn der nächsten Evakuierung wieder geöffnet wird. Bei kurzen Meßzyklen kann es hinreichend sein, die Evakuierungsleitung für den freien Raum zwischen der Außenseite des Behälters und der Innenseite der Behälterabdeckung lang auszulegen, damit über diesen Umweg kein ionisiertes Gas in den Raum außerhalb des Behälters eindringt.

Es ist zweckmäßig, das Volumen der Gasentladungskammer und der Prüfkammer möglischst klein zu halten. Es kann weiter zweckmäßig sein, ein Druckausgleichsgefäß vorzusehen, dessen Volumen größer ist als das Volumen von Gasentladungskammer und Probenkammer zusammengenommen. Damit läßt sich nach einem Wechsel von Prüflingen der vorgegebene Druck in der Probenkammer schnell einstellen und eine kurze Taktzeit im Bereich von einigen Sekunden erreichen.

Bei dünnen nicht leitenden Schichten, die empfindlich gegen Spannungsdurchschlag sind, kann es zweckmäßig sein, im Gasraum einen Druck unter 1 hPa (unter 1 mbar) und im Prüfstromkreis eine Spannung unter 500 V zu wählen.

Bei dicken nicht leitenden Schichten, die weing empfindlich gegen Spannungsdurchschlag sind, kann eine relativ hohe Prüfspannung gewählt werden.

Zum Ionisieren des Gases im Gasraum kann eine Kombination aus hoher Gleichspannung und hochfrequenter Wechselspannung benutzt werden.

Das erfindungsgemäße Verfahren und die erfindungsgemäße Vorrichtung haben folgende Vorteile:
- Es können gasdurchlässige Schadstellen nachgewiesen werden, die in einer einzelnen Schicht aus elektrisch nicht leitendem Material, zum Beispiel in einer Folie oder einer Platte vorliegen, auch wenn diese gasdurchlässigen Schadstellen flüssigkeitsdicht sind.
- Es können gasdurchlässige Schadstellen nachgewiesen werden, die bei einem Mehrschichtverbund nur in einer Schicht aus nicht leitendem Material und nicht in der Schicht aus leitendem Material vorliegen
- Es können gasdurchlässige Schadstellen in der Siegelnaht oder in der Verbindungsstelle am Behälterflansch nachgewiesen werden, auch wenn diese gasdurchlässigen Schadstellen flüssigkeitsdicht sind.
- Das Verfahren ermöglicht die 100 % - Prüfung von Behältern aus einem Mehrschicht verbund oder aus einer einzigen elektrisch nicht leitenden Schicht.
- Es können sowohl aus einem Mehrschichtverbund hergestellte Behälter als auch der Mehrschichtverbund selbst in Form von Abschnitten oder in Form einer Verbundbahn auf gasdurchlässige Schadstellen geprüft werden. Die Behälter können kollabierbar oder formstabil sein.
- Das Verfahren arbeitet ohne Hilfsstoffe (wie Elektrolyte) und ohne Berührung der zu prüfenden elektrisch nicht leitenden Schicht mit einer Elektrode.
- Das Verfahren ist empfindlicher als die Prüfung mit Hilfe eines Elektrolyten,
- Das Verfahren kann mit Luft oder einem anderen im Gasraum enthaltenen Gas durchgeführt werden.
- Das Verfahren ist bei ebenen und schwach gekrümmten Prüflingen sowie bei mit einer Öffnung versehenen Behältern mit praktisch beliebiger Form und praktisch beliebig kleinem Volumen anwendbar.
- Die Prüflinge brauchen nach der Prüfung weder gereinigt noch getrocknet zu werden.
- Sterile Prüflinge brauchen nach der Prüfung nicht erneut sterilisiert zu werden.
- Es sind kurze Taktzeiten der Prüfung erreichbar.
- Die Vorrichtung kann für vollautomatischen Betrieb ausgelegt werden.
- Die Vorrichtung kann in einer Produktionslinie für Behälter aus einem Mehrschichtverbund oder vor der Füllstation solcher Behälter angeordnet werden.
- Bei niedriger Häufigkeit von gasdurchlässigen Schadstellen kann die 100 % - Prüfung der Behälter beschleunigt werden, wenn mehrere Behälter in der Prüfkammer angebracht werden und gleichzeitig geprüft werden.
- Behälter und Verbundabschnitte mit gasdurchlässigen Schadstellen können automatisch ausgesondert werden.
- Der Ort der Schädigung der elektrisch nicht leitenden Schicht kann zum Beispiel durch Schwärzung auf Grund eines Spannungsdurchschlags sichtbar gemacht werden.

Mit dem erfindungsgemäßen Verfahren können sehr kleine gasdurchlässige Schadstellen in der zu prüfenden elektrisch nicht leitenden Schicht nachgewiesen werden, die mit einem anderen Verfahren, zum Beispiel mit einem Elektrolyten als leitendem Medium zwischen der Gegenelektrode und der leitenden Schicht des Mehrschichtverbundes, nicht nachweisbar sind.

Das erfindungsgemäße Verfahren ist zuverlässiger und empfindlicher als das Verfahren, bei dem ein Elektrolyt benutzt wird. Das letztere Verfahren wird beispielweise gestört durch Luftbläschen, die innerhalb eines Behälters mit Siegelnaht im Bereich der Siegelnaht haften und an diesen Stellen den Kontakt des Elektrolyten mit der Siegelnaht verhindern. Der Nachweis einer gasdurchlässigen Schadstelle im Bereich der Siegelnaht, an der eine Luftblase haftet, ist nicht möglich.

Das erfindungsgemäße Verfahren und die erfindungsgemäße Vorrichtung werden an Hand der Figuren weiter erläutert.

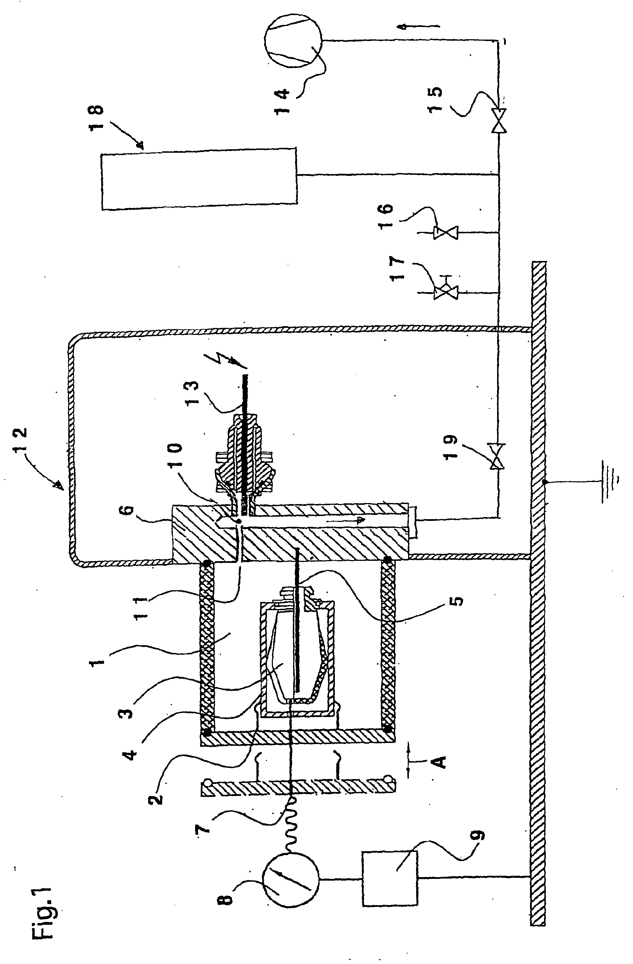

Die Figur 1 zeigt eine Prüfkammer (1), die von Seitenwänden und einer Abdeckung aus einem elektrisch isolierenden Material, zum Beispiel aus Glas, Keramik oder Kunststoff, umgeben ist, und die eine Halterungsvorrichtung (2) zum Aufnehmen des behälterförmigen Prüflings (3) enthält. Der Prüfling (3) ist von dem Probenträger (4) als isolierender Abdeckung umgeben. Die Halterungsvorrichtung (2) in Form einer federnden Klammer greift an dem Probenträger (4) aus isolierendem Material an. Mit der isolierenden Abdeckung, die bis zum Flansch des behälterförmigen Prüflings reicht, werden die Schnittkanten an der Siegelnaht des behälterförmigen Prüflings, an denen die Metallschicht des Mehrschichtverbundes offen liegt, gegenüber dem Raum mit dem ionisierten Gas abgeschirmt. Der elektrische Anschluß an den Mehrschichtverbund braucht nicht isoliert angebracht zu werden. Bei Prüflingen ohne offen liegende Metallschnittkanten kann auf die elektrisch isolierende Abdeckung des Prüflings verzichtet werden, jedoch ist dann der elektrische Anschluß an dem Mehrschichtverbund gegenüber dem ionisierten Gas abzudecken. In den behälterformigen Prüfling (3) ragt durch die Öffnung des Behälters die Gegenelektrode (5) des Prüfstromkreises hinein. Die Gegenelektrode ist im Gehäuseflansch (6) befestigt. Der Probenträger (4) ist axial verschiebbar, was durch den Pfeil A angedeutet ist. Damit läßt sich der Prüfling in die Probenkammer mühelos einbringen und leicht wechseln. In der Wand der Prüfkammer ist die elektrische Durchführung (7) vorgesehen, durch die die elektrische Leitung zum Anschluß der elektrisch leitenden Schicht des Prüflings an den Pröfstromkreis hindmchgefübrt ist. Der Prüfstromkreis enthält ein Anzeigegerät (8) mit Schutzwiderstand sowie eine Prüfspannungsquelle (9).

An die Prüfkammer (1) schließt sich die Gasentladungskammer (10) an, die mit der Prüfkammer über einen Kanal (11) im Gehäuseflansch (6) verbunden ist Der Kanal hat zum Beispiel einen Durchmesser von 2 mm. Die Größe des Kanalquerschnitts kann sich nach dem Volumen der Gasentladungskammer richten. Am metallenen Gehäuseflansch (6) ist das metallene Gehäuse (12) zur elektrischen Abschirmung der Guentladungskammer (10) angebracht. In die Gasentladungskammer (10) ragt die Hochspannungselektrode (13) hinein, die mit einem (nicht dargestellten) Hochspannungsgenerator verbunden ist.

Die Vorrichtung umfaßt weiter eine Vakuumpumpe (14), ein Absperrventil (15) für die Pumpe, ein Belüftungsventil (16), ein Dosierventil (17), ein Druckausgleichsgefäß (18) und ein Absperrventil (19) für die Gasentladungskammer und die Prüfkammer.

Nach dem Öffnen des Absperrventils (15) und bei geschlossenen Ventilen (16; 17; 19) beginnt die Pumpe (14), das Druckausgleichsgefäß (18) und die Leitungen bis zum geschlossenen Absperrventil (19) zu evakuieren. Der vorgegebenen Druck kann entweder mittels eines Druckreglers oder mittels des Dosierventils (17) durch Eindosieren von Luft eingestellt werden. Nach dem Einbringen eines Prüflings in die Probenkammer, dem Anschließen der leitenden Schicht des Mehrschichtverbundes des Prüflings und dem dichten Verschließen der Probenkammer wird das Absperrventil (19) geöffnet, wodurch sich in sehr kurzer Zeit der vorgegebene Druck in der Gasentladungskammer und in der Prüfkammer einstellt. Anschließend wird Hochspannung von zum Beispiel 2,5 kV an die Hochspannungselektrode (13) gelegt, und das Gas in der Gasentladungskammer wird ionisiert. Durch den Kanal (11) tritt das ionisierte Gas in die Prüfkammer (1) sowie in den behälterförmigen Prüfling (3) ein.

Unter Aufrechterhaltung der Gasentladung in der Gasentladungskammer wird der durch das ionisierte Gas im Prüfstromkreis fließende Prüfstrom am Anzeigegerät (8) abgelesen. Falls der Prüfstrom unterhalb eines vorgegebenen Grenzwertes liegt, wird der Prüfling bezüglich einer gasdurchlässigen Schadstelle in der innen liegenden nicht leitenden Schicht als einwandfrei angesehen. Bei über dem vorgegebenen Grenzwert liegenden Prüfstrom wird der Prüfling als nicht einwandfrei ausgesondert.

Anschließend kann das Ventil (19) geschlossen werden, die Hochspannung wird abgeschaltet, ein weiterer Prüfling wird in die Probenkammer eingebracht und an den Prüfstromkreis angeschlossen. Das Ventil (19) wird wieder geöffnet und der Prüfzyklus wird mit einem weiteren Prüfling wiederholt.

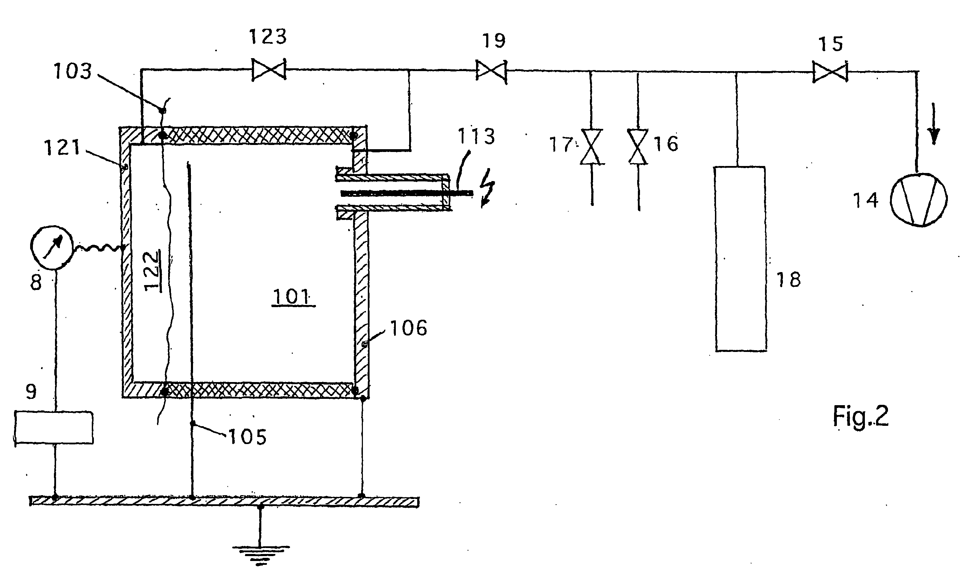

In Figur 2 ist eine weitere Ausführung einer Vorrichtung dargestellt, die zum Durch führen des erfindungsgemäßen Verfahrens analog der oben angegebenen Weise geeignet ist. Bei dieser Vorrichtung ist keine von der Prüfkammer (101) getrennte Gasentladungskammer vorgesehen. Die Hochspennungselektrode (113) ist im metallenen Gehäuseboden (106) der Prüfkammer angebracht und ist von der Prüfkammer elektrisch nicht abgeschirmt. Die Wand der Prüfkammer besteht aus einem elektrisch nicht leitenden Material, zum Beispiel aus Glas, Keramik oder Kunststoff. In die Prüfkammer ragt die Gegenelektrode (105) hinein, die stabförmig oder plattenförmig sein kann. Die Gegenelektrode liegt mit einer elektrischen Spannungsquelle (9), einem Anzeigegerät (8) und einem Schutzwiderstand im Prüfstromkreis. In der Prüfkammer ist ein Prüfling (103) anorebracht der aus einer einzigen elektrisch nicht leitenden Schicht besteht. Dieser Schicht liegt auf der einen Seite die elektrisch leitende Schicht (121) in Form eines topfförmigen metallenen Deckels der Prüfkammer gegenüber und auf der anderen Seite der Teil der Prüfkammer, in dem sich das zu ionisierende Gas befindet.

Zwischen der nicht leitenden Schicht (103) und dem Deckel (121) der Prüfkammer kann eine Volumen (122) liegen, das mit einem Gas gefüllt ist, das durch die Gasentladung nicht unmittelbar ionisiert wird. Je nach Art der nichtleitenden Schicht (103) wird das Volumen (122) gegebenenfalls über ein Ventil (123) an die Evakuierungsvorrichtung angeschlossen und auf denselben Druck evakuiert wie die Prüfkammer (101).

Das Volumen (122) kann mit einem Prüfkammerdeckel in Form einer flachen Scheibe bis auf einen vernachlässigbaren Rest verkleinert werden. Dann ist das Evakuieren des Volumens (122) gegebenenfalls entbehrlich.

Die Mittel zum Evakuieren des Gasraumes (101) und gegebenenfalls des Volumens (122) können analog zu Figur 1 ausgerührt sein.

Mit der Vorrichtung nach Figur 2 wird im Prüfstromkreis dann ein deutlicher Strom gemessen, wenn die nicht leitende Schicht (103) eine gasdurchlässige Schadstelle enthält, durch die ionisiertes Gas aus der Prüfkammer (103) in das Volumen (122) übertritt und den Prüfstromkreis schließt.

In der Tabelle 1 sind Messergebnisse an mehreren Prüflingen angegeben. Diese Ergebnisse zeigen die Brauchbarkeit des erfindungsgemäßen Verfahrens zum Nachweisen von gasdurchlässigen Schadstellen in den Prüflingen.

Die Tabelle 1 enthält Messergebnisse nach dem erfindungsgemäßen Verfahren und Messergebnisse mittels einer 5-prozentigen Kochsalzlösung als Elektrolyt, mit dem jeder Behälter randvoll gefüllt war. Für die Elektrolytprüfung wurden dieselben Prüflinge benutzt, die vorher bereits mittels ionisiertem Gas geprüft worden waren. Bei der Elektrolytprüfung wurde der Ohmsche Widerstand zwischen der leitenden Schicht des Mehrschichtverbundes und einer in den Elektrolyten eingetauchten Elektrode gemessen.

Bei unversehrter Innenschicht des Behälters ist der Ohmsche Widerstand unendlich groß. Mittels ionisiertem Gas kann jedoch auch bei unversehrter Schicht ein kleiner Strom im Prüfstromkreis gemessen werden.

Bei der Prüfung mittels Elektrolytlösung werden nur die Prüflinge 1 bis 4 als fehlerhaft bewertet. Bei der empfindlicheren erfindungsgemäßen Prüfung werden außer den Prüflingen 1 bis 4 auch die Prüflinge 7, 8,10,13 und 14 als fehlerhaft bewertet Nur die nach dem erfindungsgemäßen Verfahren geprüften Prüflinge 5, 6, 9, 11, 12 und 15 werden als einwandfrei angesehen.

Bei der für diese Messungen benutzten erfindungsgemäßen Vorrichtung werden unter Berücksichtigung der beobachteten Streuströme solche Prüflinge als einwandfrei angesehen, bei denen nach dem erfindungsgemäßen Verfahren ein Strom von weniger als etwa 0,4 mA im Prüfstromkreis gemessen wird.

**Tabelle 1**

| | Prüfung mit ionisiertem Gas | Prüfung mit Elektrolyt |
|---|---|---|
| Prüfling Nr. | Prüfstrom mA | Widerstand MΩ |
| 1 | 0,6 | 2,0 |
| 2 | 3,0 | 2,5 |
| 3 | 3,0 | 2,5 |
| 4 | 1,5 | 2,0 |
| 5 | 0,01 | ∞ |
| | | |
| 6 | 0,01 | ∞ |
| 7 | 3,0 | ∞ |
| 8 | 4,5 | ∞ |
| 9 | 0,01 | ∞ |
| 10 | 0,5 | ∞ |
| | | |
| 11 | 0,01 | ∞ |
| 12 | 0,01 | ∞ |
| 13 | 5,0 | ∞ |
| 14 | 1,5 | ∞ |
| 15 | 0,1 | ∞ |

## Patentansprüche

1. Verfahren zum Nachweisen von gasdurchlässigen Schadstellen in einem Prüfling (3;13), der eine elektrisch nicht leitende Schicht umfasst, auf deren einer Seite eine elektrisch leitende Schicht (121) und auf deren anderer Seite ein Gasraum liegen, und
- das Gas im Gasraum mittels Hochspannung ionisiert wird und die Hochspannung bevorzugt an eine im Gasraum angeordnete Elektrode (13,11) angelegt wird, und
- der Gasraum mit geeigneten Mitteln auf einen vorgegebenen Druck evakuiert wird, und
- mindestens ein Prüfling in einer auf dem vorgegebenen Druck gehaltenen Prüfkammer (1; 101) angeordnet ist, und
- in der Prüfkammer eine Gegenelektrode (5;105) vorhanden ist, und
- ein in einem Prüfstromkreis durch das ionisierte Gas fließender Strom gemessen wird, der als Indikator für eine gasdurchlässige Schadstelle in der elektrisch nicht leitenden Schicht dient, und der Prüfstromkreis die Gegenelektrode (5; 105), die elektrischleitende Schicht (121), ein Anzeigegerät (8) und eine Spannungsquelle (9) umfasst,
wobei
• das Gas im Gasraum auf der anderen Seite der elektrisch nicht leitenden Schicht durch Stoßionisierung und elektrische Gasentladung als Dunkelentladung ionisiert wird, und
• die Dunkelentladung im Gasraum während der Strommessung im Prüfstromkreis aufrecht erhalten wird, und
• die Spannungsquelle (9) des Prüfstromkreises im Bereich der elektrisch nicht leitenden Schicht eine elektrische Feldstärke erzeugt, die kleiner ist als die Durchschlagfeldstärke der eiektrisch nicht leitenden Schicht ohne gasdurchlässige Schadstelle, und
• die Prüfkammer und der Prüfling außerhalb des Hochspannungsfeldes liegen, in dem das Gas ionisiert wird.

2. Verfahren nach Anspruch 1, **gekennzeichnet durch**
• Prüfen von Prüflingen (3), die aus einem Mehrschichtverbund mit einer elektrisch leitenden Schicht und mindestens einer elektrisch nicht leitenden Schicht bestehen.

3. Verfahren nach Anspruch 1, **gekennzeichnet durch**
• Prüfen von Prüflingen (3), die als Behälter mit einer Öffnung vorliegen, und die aus einem Mehrschichtverbund hergestellt sind.

4. Verfahren nach Anspruch 1, **gekennzeichnet durch**
• Prüfen von Prüflingen (103), die aus einer elektrisch nicht leitenden Folie oder Platte bestehen, und denen auf der einen Seite eine elektrisch leitende Schicht (121) gegenüber liegt.

5. Verfahren nach Anspruch 1, **gekennzeichnet durch**
• einen Druck im ionisierten Gas von 0,5 hPa bis 50 hPa (von 0,5 mbar bis 50 mbar), vorzugsweise von 1 hPa bis 4 hPa (von 1 mbar bis 4 mbar).

6. Verfahren nach Anspruch 1, **gekennzeichnet durch**
• Betreiben der Gasentladung mit hochgespannter elektrischer Energie, die in geeigneter Weise eingespeist wird, bevorzugt **durch** Elektroden (13; 113).

7. Verfahren nach Anspruch 1, **gekennzeichnet durch**
• Betreiben der Gasentladung mit Gleichspannung von 0,5 kV bis 10 kV.

8. Verfahren nach Anspruch 1, **gekennzeichnet durch**
• Betreiben der Gasentladung mit Wechselspannung von 0,5 kV bis 10 kV.

9. Verfahren nach den Ansprüchen 1 und 8, **gekennzeichnet durch**
• Betreiben der Gasentladung mit Wechselspannung bei einer Frequenz von 10 Hz bis 30 kHz.

10. Verfahren nach den Ansprüchen 1 und 8, **gekennzeichnet durch**
• Betreiben der Gasentladung mit hochfrequenter Wechselspannung.

11. Verfahren nach den Ansprüchen 1 und 10, **gekennzeichnet durch**
• Betreiben der Gasentladung mit einer Wechselspannung von 30 kHz bis 1 GHz, bevorzugt von 30 kHz bis 100 kHz, besonders bevorzugt von 30 kHz bis 40 kHz.

12. Verfahren nach Anspruch 1, **gekennzeichnet durch**
• Erzeugen des Stromflusses - bei Vorliegen einer gasdurchlässigen Schadstelle in der elektrisch nicht leitenden Schicht - im ionisierten Gas in der Prüfkammer **durch** Anlegen einer elektrischen Spannung von 50 V bis 5000 V, die im Bereich der elektrisch nicht leitenden Schicht eine elektrische Feldstärke erzeugt, die unterhalb der Durchschlagfeldstärke der elektrisch nicht leitenden Schicht ohne gasdurchlässige Schacistellen liegt, bevorzugt von 500 V bis 1500 V.

13. Verfahren nach Anspruch 1, **gekennzeichnet durch**
• Ionisieren des Gases mittels Gleichspannung und Stoßionisierung innerhalb der Prüfkammer (1; 101) und Anlegen einer elektrischen Wechselspannung zwischen der elektrisch leitenden Schicht (121) und der in der Prüfkammer angeordneten Gegenelektrode (5; 105).

14. Verfahren nach Anspruch 1, **gekennzeichnet durch**
• Ionisieren des Gases mittels Hochspannung und Stoßionisierung innerhalb einer Gasentladungskammer(10), die von der Prütkammer(1) elcktrischabgeschirmtist, und die mit der Prüfkammer über mindestens einen Kanal (11) in Verbindung steht.

15. Verfahren nach den Ansprüchen 1 und 14, **gekennzeichnet durch**
• Ionisieren des Gases mittels Hochspannung und Stoßionisierung innerhalb einer Gasentladungskammer (10), die von der Prüfkammer (1) elektrisch abgeschirmt ist, und die mit der Prüfkammer über Öffnungen in einem Drahtgitter in Verbindung steht.

16. Verfahren nach Anspruch 1, **gekennzeichnet durch**
• Einstellen des Gasdruckes und der Spannung im Prüfstromkreis auf Werte, bei denen die elektrische Feldstärke im Bereich zwischen Gegenelektrode (105) und elektrisch leitender Schicht (121) unterhalb der Durchschlagfeldstärke der elektrischnichtleitenden Schicht ohne gasdurchlässige Schadstellen liegt, undbei denen an einer gasdurchlässigen Schadstelle in der elektrisch nicht leitenden Schicht durch einen Spannungsdurchschlag eine erkennbare Veränderung erzeugt wird, mit der der Ort der gasdurchlässigen Schadstelle optisch markiert wird.

17. Verfahren nach Anspruch 1, **gekennzeichnet durch**
• Abdecken des als Behälter vorliegenden Prüflings (3) in der Prüfkammer (1) mit einer Abdeckung, die als Probenträger (4) ausgebildet ist, und die aus elektrisch nicht leitendem Material besteht.

18. Verfahren nach den Ansprüchen 1 und 17. **gekennzeichnet durch**
• Herstellen des elektrischen Kontaktes zu der elektrisch leitenden Schicht eines Verbundes aus drei Schichten mit innen liegenderleitender Schichtund jeweilseiner außen liegenden nicht leitenden Schicht **durch** Durchstechen der drei Schichten in einer Siegelnaht des Behälters.

19. Vorrichtung zum Nachweisen von gasdurchlässigen Schadstellen in mindestens einem Prüfling (3; 103) mit einer elektrisch nicht leitenden Schicht, auf deren einer Seite eine elektrisch leitende Schicht (121) und auf deren anderer Seite ein Gasraum liegen, und
- Mittel zum Ionisieren des Gases im Gasraum durch Dunkelentladung die eine Hochspannungsquelle und bevorzugt eine im Gasraum angebrachte Hochspannungselektrode (13; 113) umfassen, und
- Mittel (14 bis 17) zum Evakuieren des Gasrumes auf einen vorgegebenen Druck, und
- eine Prüfkammer (1; 101), die mindestens einen Prüfling (3; 103) enthält, und
- eine Gegenelektrode (5; 105) in der Prüfkammer, und
- einen Prüfstromkreis, der eine Spannungsquelle (9), ein Anzeigegerät (8), die elektrisch leitende Schicht und die Gegenelektrode (5; 105) umfasst,
wobei
• die Prüfkammer (1; 101) mit dem mindestens einen Prüfling außerhalb des elektrischen Feldes angeordnet ist, das von der Hochspannung erzeugt wird, und
• die Prüfkammer mit dem Gasraum verbunden ist, der das ionisierte Gas enthält, und die Spannungsquelle (9) so eingerichtet ist, dass im Bereich der elektrisch nicht leitenden schicht eine elektrische Feldstärke erzeugt wird, die kleiner ist als die Durchschlagfeldstärke der Schicht ohne gasdurchlässige Schadstelle

20. Vorrichtung nach Anspruch 19, wobei
• die Gasentladungskammer (10), die die Elektrode zum Erzeugen der Gasentladung enthält, mit der Prüfkammer über mindestens einen Kanal (11) verbunden ist, und
• die Gasentladungskammer (10) mit einer elektrische Abschirmung (12) versehen ist.

21. Vorrichtung nach Anspruch 19, wobei
• die Hochspannungselektrode (113) im Gehäuseboden der Prüfkammer angebracht ist.

22. Vorrichtung nach Anspruch 19, wobei
• das Anzeigegerät (8) als Schaltgerät ausgebildet ist, und das nach Überschreiten eines eingestellten Stromgrenzwertes im Prüfstromkreis ein Signal abgibt oder eine Wirkung auslöst.

23. Vorrichtung nach Anspruch 19, **gekennzeichnet durch**
• ein Druckausgleichsgefäß (18).

24. Vorrichtung nach Anspruch 20, **gekennzeichnet durch**
• ein Absperrventil im Kanal (11) zwischen der Gasentladungskammer und der Prüfkammer.

25. Vorrichtung nach Anspruch 20, gekennzeichent durch ,
• eine Abdeckung (4), die als Probenträger für einen Behälter ausgebildet ist, und die aus einem elektrisch nicht leitenden Material besteht.

## Claims

1. A process for detecting gas-permeable damage points in a testpiece (3; 13) which includes an electrically non-conductive layer, on one side of which is disposed an electrically conductive layer (121) and on the other side of which is a gas space, and
- the gas is ionised in the gas space by means of high voltage and the high voltage is preferably applied to an electrode (13, 113) arranged in the gas space, and
- the gas space is evacuated with suitable means to a predetermined pressure, and
- at least one testpiece is arranged in a test chamber (1; 101) held at the predetermined pressure, and
- there is a counterpart electrode (5; 105) in the test chamber, and
- a current flowing in a test circuit through the ionised gas is measured, which current serves as an indicator for a gas-permeable damage point in the electrically non-conductive layer, and the test circuit includes the counterpart electrode (5; 105), the electrically conductive layer (121), a display device (8) and a voltage source (9),
wherein
- the gas is ionised in the gas space on the other side of the electrically non-conductive layer by impact ionisation and electrical gas discharge in the form of dark discharge, and
- the dark discharge is maintained in the gas space during current measurement in the test circuit, and
- the voltage source (9) of the test circuit in the region of the electrically non-conductive layer produces an electrical field strength which is less than the breakdown field strength of the electrically non-conductive layer without a gas-permeable damage point, and
- the test chamber and the testpiece are outside the high voltage field in which the gas is ionised.

2. A process according to claim 1 **characterised by**
- testing testpieces (3) which comprise a multi-layer composite with an electrically conductive layer and at least one electrically non-conductive layer.

3. A process according to claim 1 **characterised by**
- testing testpieces (3) which are in the form of a container with an opening and which are made from a multi-layer composite.

4. A process according to claim 1 **characterised by**
- testing testpieces (3) which comprise an electrically non-conductive film or plate and in opposite relationship to which on the one side there is an electrically conductive layer (121).

5. A process according to claim 1 **characterised by**
- a pressure in the ionised gas of 0.5 hPa to 50 hPa (from 0.5 mbar to 50 mbar), preferably from 1 hPa to 4 hPa (from 1 mbar to 4 mbar).

6. A process according to claim 1 **characterised by**
- operation of the gas discharge with high-voltage electrical energy which is supplied in a suitable manner, preferably by electrodes (13; 113).

7. A process according to claim 1 **characterised by**
- operating the gas discharge with dc voltage of 0.5 kV to 10 kV.

8. A process according to claim 1 **characterised by**
- operating the gas discharge with ac voltage of 0.5 kV to 10 kV.

9. A process according to claims 1 and 8 **characterised by**
- operating the gas discharge with ac voltage at a frequency of 10 Hz to 30 Hz.

10. A process according to claims 1 and 8 **characterised by**
- operating the gas discharge with high-frequency ac voltage.

11. A process according to claims 1 and 10 **characterised by**
- operating the gas discharge with an ac voltage of 30 kHz to 1 GHz, preferably of 30 kHz to 100 kHz, particularly preferably from 30 kHz to 40 kHz.

12. A process according to claim 1 **characterised by**
- producing the current flow - when there is a gas-permeable damage point in the electrically non-conductive layer - in the ionised gas in the test chamber by applying an electrical voltage of 50 V to 5000 V, which in the region of the electrically non-conductive layer produces an electrical field strength which is below the breakdown field strength of the electrically non-conductive layer without gas-permeable damage points, preferably 500 V to 1500 V.

13. A process according to claim 1 **characterised by**
- ionisation of the gas by means of dc voltage and impact ionisation within the test chamber (1; 101) and application of an electrical ac voltage between the electrically conductive layer (121) and the counterpart electrode (5; 105) arranged in the test chamber.

14. A process according to claim 1 **characterised by**
- ionisation of the gas by means of high voltage and impact ionisation within a gas discharge chamber (10) which is electrically screened from the test chamber (1) and which is in communication with the test chamber by way of at least one passage (11).

15. A process according to claims 1 and 14 **characterised by**
- ionisation of the gas by means of high voltage and impact ionisation within a gas discharge chamber (10) which is electrically screened from the test chamber (1) and which is in communication with the test chamber by way of openings in a wire grid.

16. A process according to claim 1 **characterised by**
- adjusting the gas pressure and the voltage in the test circuit to values at which the electrical field strength in the region between the counterpart electrode (105) and the electrically conductive layer (121) is below the breakdown field strength of the electrically non-conductive layer without gas-permeable damage points and at which a recognisable change is produced at a gas-permeable damage point in the electrically non-conductive layer by a voltage breakdown thereof, with which change the location of the gas-permeable damage point is optically marked.

17. A process according to claim 1 **characterised by**
- covering the testpiece (3) which is in the form of a container in the test chamber (1) with a cover which is in the form of a sample carrier (4) and which comprises electrically non-conductive material.

18. A process according to claims 1 and 17 **characterised by**
- making the electrical contact with the electrically conductive layer of a composite of three layers with an inwardly disposed conductive layer and a respective outwardly disposed non-conductive layer by piercing the three layers in a sealing seam of the container.

19. Apparatus for detecting gas-permeable damage points in at least one testpiece (3; 103) with an electrically non-conductive layer, on one side of which there is an electrically conductive layer (121) and on the other side of which there is a gas space, and
- means for ionising the gas in the gas space by dark discharge, which include a high voltage source and preferably a high voltage electrode (13; 113) disposed in the gas space, and
- means (14 to 17) for evacuating the gas space to a predetermined pressure, and
- a test chamber (1; 101) which contains at least one testpiece (3; 103), and
- a counterpart electrode (5; 105) in the test chamber, and
- a test circuit which includes a voltage source (9), a display device (8), the electrically conductive layer and the counterpart electrode (5; 105),
wherein
- the test chamber (1; 101) with the at least one testpiece is arranged outside the electrical field which is produced by the high voltage and
- the test chamber is connected to the gas space which contains the ionised gas, and
- the voltage source (9) is so designed that in the region of the electrically non-conductive layer, an electrical field strength is produced which is less than the breakdown field strength of the layer without a gas-permeable damage point.

20. Apparatus according to claim 19 wherein
- the gas discharge chamber (10) which contains the electrode for producing the gas discharge is connected to the test chamber by way of at least one passage (11), and
- the gas discharge chamber (11) is provided with an electrical screening (12).

21. Apparatus according to claim 19 wherein
- the high voltage electrode (113) is disposed in the housing bottom of the test chamber.

22. Apparatus according to claim 19 wherein
- the display device (8) is in the form of a switching device and which after a set current limit value in the test circuit is exceeded emits a signal or triggers an effect.

23. Apparatus according to claim 19 **characterised by**
- a pressure compensating vessel (18).

24. Apparatus according to claim 20 **characterised by**
- a shut-off valve in the passage (11) between the gas discharge chamber and the test chamber.

25. Apparatus according to claim 20 **characterised by**
- a cover (4) which is in the form of a sample carrier for a container and which comprises an electrically non-conductive material.

## Revendications

1. Procédé pour mettre en évidence des points défectueux perméables aux gaz dans un échantillon (3 ; 13) qui comporte une couche électriquement non conductrice sur l'un des côtés de laquelle se trouve une couche électriquement conductrice (121) et sur l'autre côté de laquelle se trouve un espace de gaz, et
- le gaz dans l'espace de gaz est ionisé au moyen d'une haute tension et la haute tension est appliquée de préférence à une électrode (13, 113) disposée dans l'espace de gaz, et
- l'espace de gaz est mis sous vide à une pression prédéterminée avec des moyens appropriés, et
- au moins un échantillon est disposé dans une chambre d'examen (1 ; 101) maintenue à la pression prédéterminée, et
- une contre-électrode (5 ; 105) est présente dans la chambre d'examen, et
- un courant circulant dans le gaz ionisé dans un circuit d'examen qui sert d'indicateur pour un point défectueux perméable aux gaz dans la couche électriquement non conductrice est mesuré, et le circuit d'examen comprend la contre-électrode (5 ; 105), la couche électriquement conductrice (121) un appareil indicateur (8) et une source de tension (9),
où
• le gaz dans l'espace de gaz de l'autre côté de la couche électriquement non conductrice est ionisé par ionisation par impulsions et décharge électrique gazeuse sous forme de décharge sombre, et
• la décharge sombre dans l'espace de gaz est maintenue pendant la mesure du courant dans le circuit d'examen, et
• la source de tension (9) du circuit d'examen produit dans le domaine de la couche électriquement non conductrice une intensité de champ électrique qui est inférieure à l'intensité de champ de claquage de la couche électriquement non conductrice sans point défectueux perméable aux gaz, et
• la chambre d'examen et l'échantillon sont situés à l'extérieur du champ à haute tension dans lequel le gaz est ionisé.

2. Procédé selon la revendication 1 **caractérisé par**
• l'examen d'échantillons (3) qui consistent en un composite multicouche avec une couche électriquement conductrice et au moins une couche électriquement non conductrice.

3. Procédé selon la revendication 1 **caractérisé par**
• l'examen d'échantillons (3) qui sont sous forme de récipient avec une ouverture et qui sont fabriqués à partir d'un composite multicouche.

4. Procédé selon la revendication 1 **caractérisé par**
• l'examen d'échantillons (103) qui consistent en une feuille ou plaque électriquement non conductrice et en face d'un côté desquels est située une couche électriquement conductrice (121).

5. Procédé selon la revendication 1 **caractérisé par**
• une pression dans le gaz ionisé de 0,5 hPa à 50 hPa (de 0,5 mbar à 50 mbar), de préférence de 1 hPa à 4 hPa (de 1 mbar à 4 mbar).

6. Procédé selon la revendication 1 **caractérisé par**
• la réalisation de la décharge gazeuse avec une énergie électrique à haute tension qui est introduite de manière appropriée, de préférence par des électrodes (13 ; 113).

7. Procédé selon la revendication 1 **caractérisé par**
• la réalisation de la décharge gazeuse avec une tension continue de 0,5 kV à 10 kV.

8. Procédé selon la revendication 1 **caractérisé par**
• la réalisation de la décharge gazeuse avec une tension alternative de 0,5 kV à 10 kV.

9. Procédé selon les revendications 1 et 8 **caractérisé par**
• la réalisation de la décharge gazeuse avec une tension alternative à une fréquence de 10 Hz à 30 kHz.

10. Procédé selon les revendications 1 et 8 **caractérisé par**
• la réalisation de la décharge gazeuse avec une tension alternative à haute fréquence.

11. Procédé selon les revendications 1 et 10 **caractérisé par**
• la réalisation de la décharge gazeuse avec une tension alternative de 30 kHz à 1 GHz, de préférence de 30 kHz à 100 kHz, de manière particulièrement préférée de 30 kHz à 40 kHz.

12. Procédé selon la revendications 1 **caractérisé par**
• la production de la conduction de courant - en présence d'un point défectueux perméable aux gaz dans la couche électriquement non conductrice - dans le gaz ionisé dans la chambre d'examen par application d'une tension électrique de 50 V à 5000 V, qui produit dans le domaine de la couche électriquement non conductrice une intensité de champ électrique qui est située en dessous de l'intensité de champ de claquage de la couche électriquement non conductrice sans points défectueux perméables aux gaz, de préférence de 500 V à 1500 V.

13. Procédé selon la revendication 1 **caractérisé par**
• l'ionisation du gaz au moyen d'une tension continue et d'une ionisation à impulsions dans la chambre d'examen (1 ; 101) et l'application d'une tension électrique alternative entre la couche électriquement conductrice (121) et la contre-électrode (5 ; 105) disposée dans la chambre d'examen.

14. Procédé selon la revendication 1 **caractérisé par**
• l'ionisation du gaz au moyen d'une haute tension et d'une ionisation à impulsions dans une chambre de décharge gazeuse (10) qui est séparée par blindage électrique de la chambre d'examen (1) et qui est reliée à la chambre d'examen par au moins un canal (11).

15. Procédé selon les revendications 1 et 14 **caractérisé par**
• l'ionisation du gaz au moyen d'une haute tension et d'une ionisation à impulsions dans une chambre de décharge gazeuse (10) qui est séparée par blindage électrique de la chambre d'examen (1) et qui est reliée à la chambre d'examen par des ouvertures dans une grille en fil métallique.

16. Procédé selon la revendication 1 **caractérisé par**
• l'établissement de la pression gazeuse et de la tension dans le circuit d'examen à des valeurs auxquelles l'intensité de champ électrique dans le domaine entre la contre-électrode (105) et la couche électriquement conductrice (121) est située en dessous de l'intensité de champ de claquage de la couche électriquement non conductrice sans points défectueux perméables aux gaz, et auxquelles une modification identifiable est produite au niveau d'un point défectueux perméable aux gaz dans la couche électriquement non conductrice par un claquage de tension, avec laquelle le site du point défectueux perméable aux gaz est marqué optiquement.

17. Procédé selon la revendication 1 **caractérisé par**
• l'enveloppement de l'échantillon (3) présent sous forme de récipient dans la chambre d'examen (1) avec une enveloppe qui est sous forme de porte-échantillon (4) et qui consiste en un matériau électriquement non conducteur.

18. Procédé selon les revendications 1 et 17 **caractérisé par**
• l'établissement du contact électrique avec la couche électriquement conductrice d'un composite à trois couches avec une couche conductrice située à l'intérieur et dans chaque cas une couche non conductrice située à l'extérieur par perforation des trois couches dans un joint de scellement du récipient.

19. Procédé pour mettre en évidence des points défectueux perméables aux gaz dans au moins un échantillon (3 ; 103) avec une couche électriquement non conductrice sur l'un des côtés de laquelle se trouve une couche électriquement conductrice (121) sur l'autre côté de laquelle se trouve un espace de gaz, et
- des moyens pour l'ionisation du gaz dans l'espace de gaz par décharge sombre qui comprennent une source de haute tension et de préférence une électrode à haute tension (13 ; 113) disposée dans l'espace de gaz, et
- des moyens (14 à 17) pour la mise sous vide de l'espace de gaz à une pression prédéterminée, et
- une chambre d'examen (1 ; 101), qui contient au moins un échantillon (3 ; 103), et
- une contre-électrode (5 ; 105) dans la chambre d'examen, et
- un circuit d'examen qui comprend une source de tension (9), un appareil indicateur (8), la couche électriquement conductrice et la contre-électrode (5; 105),
où
• la chambre d'examen (1 ; 101) avec le ou les échantillons est disposée à l'extérieur du champ électrique qui est produit par la haute tension, et
• la chambre d'examen est reliée à l'espace de gaz qui contient le gaz ionisé, et
• la source de tension (9) est agencée de telle manière qu'une intensité de champ électrique qui est inférieure à l'intensité de champ de claquage de la couche sans point défectueux perméable aux gaz est produite dans le domaine de la couche électriquement non conductrice.

20. Dispositif selon la revendication 19 où
• la chambre de décharge gazeuse (10), qui contient l'électrode pour produire la décharge gazeuse, est reliée à la chambre d'examen par au moins un canal (11), et
• la chambre de décharge gazeuse (10) est munie d'un blindage électrique (12).

21. Dispositif selon la revendication 19 où
• l'électrode à haute tension (113) est disposée dans le fond du boîtier de la chambre d'examen.

22. Dispositif selon la revendication 19 où
• l'appareil indicateur (8) est sous forme d'appareil commutateur et qui, après dépassement d'une valeur limite de courant établie dans le circuit d'examen, délivre un signal ou déclenche un effet.

23. Dispositif selon la revendication 19 **caractérisé par**
• un réservoir d'égalisation de pression (18).

24. Dispositif selon la revendication 20 **caractérisé par**
• une soupape d'arrêt dans le canal (11) entre la chambre de décharge gazeuse et la chambre d'examen.

25. Dispositif selon la revendication 20 **caractérisé par**
• une enveloppe (4) qui est sous forme de porte-échantillon pour un récipient et qui consiste en un matériau électriquement non conducteur.
